# EUROPEAN PATENT SPECIFICATION

(11) **EP 4 594 670 B1**
(45) Date of publication and mention of the grant of the patent: **17.06.2026**
(21) Application number: 23782528.6
(22) Date of filing: 28.09.2023
(51) Int. Cl.: F16L 37/33, F16K 15/04

(54) **QUICK COUPLER FOR A BIDIRECTIONAL CHECK VALVE AND A FLUID COUPLING COMPRISING TWO SUCH QUICK COUPLERS**
SCHNELLKUPPLUNG FÜR EIN ZWEIRICHTUNGSRÜCKSCHLAGVENTIL UND EINE FLÜSSIGKEITSKUPPLUNG MIT ZWEI SOLCHEN SCHNELLKUPPLUNGEN
RACCORD RAPIDE POUR CLAPET ANTI-RETOUR BIDIRECTIONNEL ET RACCORD FLUIDIQUE COMPRENANT DEUX TELS RACCORDS RAPIDES

(30) Priority: 28.09.2022 EP 22198363
(43) Date of publication of application: 06.08.2025
(73) Proprietor: SFC KOENIG AG, 8953 Dietikon (CH)
(72) Inventor: LORENZELLI, Luca, 8953 Dietikon (CH); PISTER, Manfred, 8953 Dietikon (CH); SELIMAJ, Jetmir, 8953 Dietikon (CH); ABAZI, Ramadan, 8953 Dietikon (CH)
(74) Representative: Mayer, Aline Sophie
(86) International application number: PCT/EP2023/076975
(87) International publication number: WO 2024/068885

(56) References cited:
- EP-B1- 2 376 741
- GB-A- 2 571 933
- US-A- 1 331 720

## Description

### TECHNICAL FIELD

The present invention relates to a quick coupler for a bidirectional check valve and a fluid coupling comprising two such quick couplers.

### PRIOR ART

WO 03/087638 A1 discloses a bi-directional check valve controlling the movement of a fluid. A valve body has an opening at one side, a further opening at the opposite side of the valve and a passage connecting the opening and the further opening. A movable poppet defines a cavity and is disposed within the passage of the valve body. A spring is coupled to the movable poppet. A further poppet is disposed within the cavity, and a further spring is coupled to the movable poppet and to the further poppet, which further spring is opposite to the spring. When fluid passes through the opening in the valve body and exerts a force on the movable poppet that is greater than the spring force, the further portion of the outer surface of the movable poppet is directed away from the further portion of the wall of the passage and permits the fluid to flow from the opening in the valve body through a channel and to the further opening in the valve body. When fluid passes through the further opening in the valve body and exerts a force on the further poppet that is greater than the further spring force, the further portion of the outer surface of the further poppet is directed away from the further opening in the valve body to open a further channel in the movable poppet and permit the fluid to flow from the further opening in the valve body through the further channel and a plurality of flutes or recesses in an outer surface of the further poppet to the opening of the valve body.

US 2017/191 595 A1 discloses a coupling including a coupler and nipple. The nipple has a valve in a normally-closed position and an outer peripheral surface with a plurality of spaced-apart, close-ended cam paths. The coupler has a valve in a normally-closed position and includes a set of latching balls for engagement with the cam paths to secure the coupler to the nipple. The coupler further includes a sleeve mounted thereon and movable between forward and retracted positions. In the forward position, the latching balls are forced into an inward position that prevents release of the latching balls from the cam paths, and in the retracted position, the latching balls are permitted to extend to an outward position enabling initial engagement with or disengagement from the cam paths. The coupler also includes a set of locking balls that prevents movement of the sleeve to the retracted position.

Furthermore, US 6,354,564 B1 discloses a ball detent fluid coupling for liquid and gas applications with a ball-retaining sleeve on the socket that is retractable by hand for joining and for separating the socket and plug and comprises a pressure-actuated check valve mounted on a valve guide within the flow path to preclude backflow into the supply side of the coupling. The valve also operates to shut off the flow when the mating parts of the coupling are disconnected or when flow through the coupling is shut off. A conventional valve can be mounted in the fluid flow passageway opposite the pressure-actuated check valve to urge the mating plug and socket to decouple when the sleeve releases the ball detents from engagement with the plug and to stop flow in the discharge line.

US 5,540,250 A discloses a further ball detent fluid coupling for gas fuel for appliances and the like equipment with push-to-connect and pull-to-disconnect features as well as a heat responsive breakaway feature,

EP 1 148 285 A2 A quick-action fluid coupling for connecting two fluid-conducting lines includes a plug for attachment to one of the lines and a socket for attachment to the other. The socket has a tubular body and includes a valve having a valve sleeve and a fixed valve stem coaxially disposed within the tubular body. The valve sleeve is moved axially upon connection of the plug and socket so as to open a fluid flow passage between the valve sleeve and the valve stem. The outer surface of the valve stem defines a plurality of circumferentially spaced depressions therein. A circumferential groove is defined in an inner surface of the tubular body and is spaced radially outward of and in axial alignment with the depressions in the valve stem. A plurality of separately formed, discrete retaining elements are respectively engaged partly in the depressions in the valve stem and partly in the groove in the tubular body. Each retaining element is captively retained between forwardly and rearwardly inclined surfaces of the corresponding depression and between forwardly and rearwardly inclined surfaces of the groove. Thus, the retaining elements cooperate with the surfaces of the groove and of the depressions to prevent axial movement of the valve stem. The plug includes a valve member that is slid to an open position by engagement with the valve stem of the socket when the plug is inserted into the socket.

Further documents relating to this technical field are EP 2 376 741 B1, US 1,331,720 A and GB 2,571,933.

### SUMMARY OF THE INVENTION

Based on this prior art it is an object of the invention to provide a quick coupler for fluid-conducting lines which can be easily used in fluid couplers.

Such a quick coupler comprises a tubular body having an external sleeve surface, an internal reception cavity, an axial fluid flow passage therethrough and a valve seat , an expansion body having an axial fluid flow passage therethrough and an external sleeve surface, and a valve comprising a valve ball, a stem and a compression spring. The external sleeve surface of the expansion body is oversized in view of the internal reception cavity of the tubular body for creating an outwards directed force on the external sleeve surface of the tubular body when introduced into the tubular body. The valve ball is positioned between the spring and the stem, wherein the spring is positioned to pretension the valve ball against the valve seat and closing the axial fluid flow passage through the quick coupler for any pressure on the valve ball from the direction of the stem lower than a predetermined threshold, wherein the stem is extending beyond the front surface of the tubular body when the valve ball is in contact with the valve seat and wherein the axial fluid flow passage through the quick coupler is open when the stem is pushed in the direction of the valve ball hat the front surface of the stem is flush with the front surface of the tubular body, wherein the spring and the valve ball are at least partially positioned in a cylindrical housing which is attached to the tubular body.

The stem can have a flange having a greater diameter than the guiding bore of the expansion body.

The housing can have a side opening near its attachment portion to the tubular body allowing a fluid ball passing the valve ball to leave the housing.

The housing can have a first inner diameter near the attachment portion to the tubular body adapted to accommodate and guide the valve ball and a second inner diameter on the side opposite to the attachment portion to the tubular body adapted to accommodate and guide the spring.

Then, the housing can have an open bottom surface and/or side openings along its portion with the second diameter.

Furthermore, the first diameter can then be larger than the second diameter and a tapering section is provided between the two portions of different diameter.

The axial fluid flow passage inside the expansion body can comprise at least one, preferably a number of axial through holes in the expansion body in a radial distance from the longitudinal axis of the expansion body.

A fluid coupling for fluid-conducting lines comprises a first and a second quick coupler according to the invention and a male and a female hydraulic connector. The male hydraulic connector has an axial fluid flow passage therethrough, a reception cavity with the diameter of the tubular body of the first quick coupler and having a rear end for connection with a first fluid-conducting line and an opposite forward end and comprising a coupling end. The female hydraulic connector has an axial fluid flow passage therethrough including a reception cavity with the diameter of the tubular body of the first second quick coupler and having a rear end for connection with a second fluid-conducting line and an opposite forward end as well as a reception cavity for the coupling end of the male hydraulic connector. The first and second quick coupler are positioned in the male and female hydraulic connectors with the front surface not extending beyond the front surface or beyond the inner wall surface of the reception cavity of the male and female hydraulic connector, respectively, when the expansion bodies of the quick couplers are fully positioned in the respective quick couplers. The male and female hydraulic connectors are configured such that the forward end of the male hydraulic connector can be axially inserted into the forward end of the female hydraulic connector for establishing a continuous fluid flow path between the hydraulic connectors.

Such a fluid coupling can have the male hydraulic connector as well as the female hydraulic connector comprising a connection device, especially a screw. In one coupling system, the fixing of the male connector to the female connector is achieved by means of a tightening screw placed on one side of the connector. This can introduce a tilt angle in the opening force applied to the check valves, making it not perfectly aligned along the longitudinal axis of symmetry. In a different solution, a the straight, axysymmetrical geometry of the connectors is chosen, wherein the engagement of the cylindrical surfaces of the male and female connectors, together with the axysymmetrical engagement of the thread on a nut - as a part of the connection device - with a complementary thread on the female connector, ensures a perfect in-line application of the opening force along the longitudinal axis of symmetry.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a schematic cross-section view of a fluid control element according to an embodiment of the invention in the closed position of the valve when not coupled;
- Fig. 2: shows the schematic cross-section view of the fluid control element of Fig. 1, when the valve is in the open position, i.e. when the fluid control element is coupled;
- Fig. 3: shows a schematic cross-section view of two fluid control elements according to Fig. 1 positioned in the male and female hydraulic connectors of a bidirectional check valve one in face of the other;
- Fig. 4: shows the schematic cross-section view of Fig. 3, when the bidirectional check valve is closed;
- Fig. 5: shows a view on the front surface of the fluid control element;
- Fig. 6: shows a perspective view of the fluid control element of Fig. 1;
- Fig. 7: shows a schematic cross-section view of two fluid control elements according to Fig. 1 positioned in the male and female hydraulic connectors of a further bidirectional check valve one in face of the other; and
- Fig. 8: shows the schematic cross-section view of Fig. 7, when the further bidirectional check valve is closed.

### DESCRIPTION OF PREFERRED EMBODIMENTS

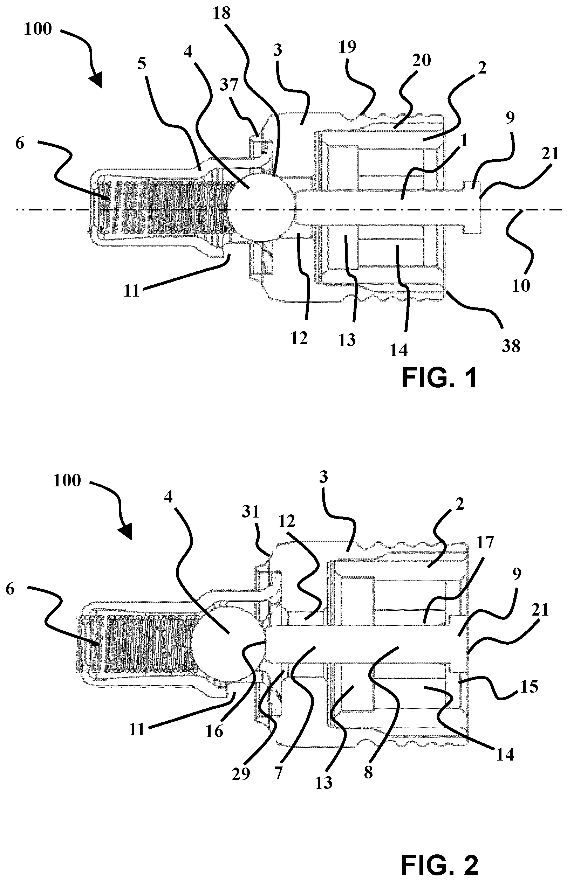

Fig. 1 shows a schematic cross-section view of a fluid control element 100 according to an embodiment of the invention in the closed position of the valve when not coupled. Fig. 2 shows a schematic cross-section view of the fluid control element 100 of Fig. 1 when the valve is in the open position, i.e. when the fluid control element 100 is coupled. It is noted that Fig. 1 and Fig. 2 show the fluid control element 100 with a fully inserted expansion pin 2 blocking effectively the blow-out of the fluid control element 100 from the respective female 22 or male 23 hydraulic connector in which it is functionally inserted.

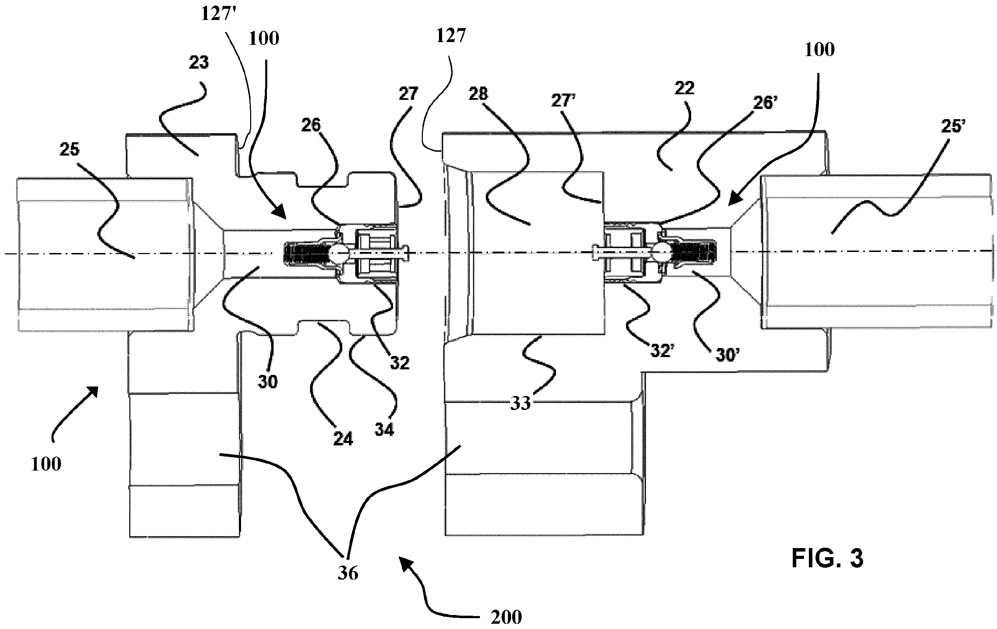

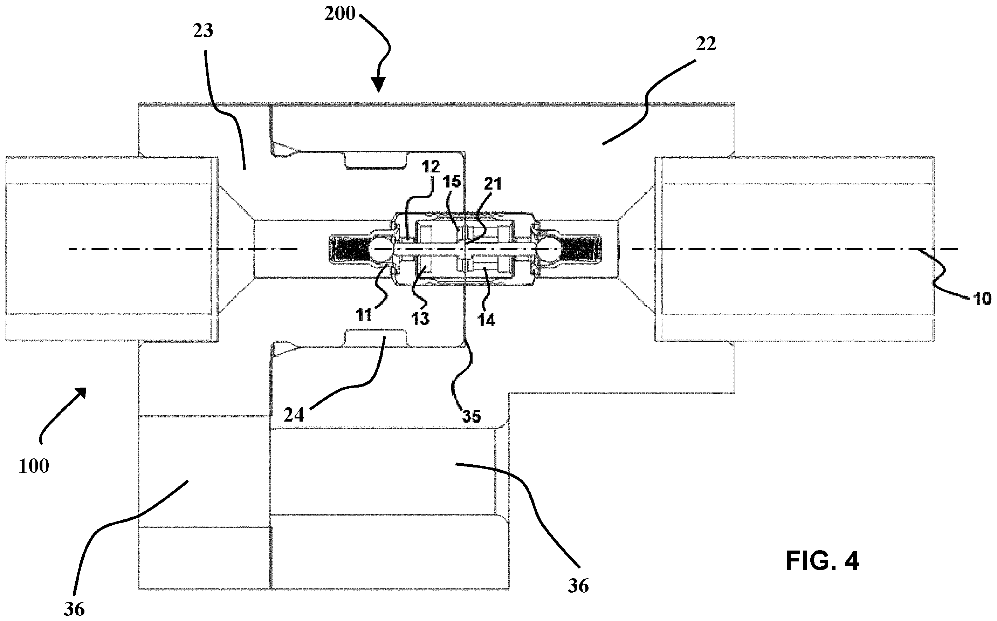

The flow control element 100 according to the invention is a quick coupling element that is to be inserted into coupling members, especially an hydraulic connection 200 of a male and a female hydraulic connector 22, 23 between two hoses 25, 25' or at the junctions inside an hydraulic system as will be seen in Fig. 3 and Fig. 4, showing the coupling element 100 in a fully inserted state as explained below.

The quick coupling element 100 comprises a sleeve-shaped or tubular base body 3, an expansion pin 2, a sealing sphere 4, a loading spring 6, a housing 5 for the loading spring 6 and the sealing sphere 4, and an opening piston 1. All these elements are provided around the longitudinal axis 10 of the quick coupling element 100 which will be at the same time the longitudinal axis 10 of the female 22 and male 23 hydraulic connector. The tubular base body 3 comprises a reduced diameter shoulder 31 within which a reception for the housing 5 is provided as well as a matching curvature seat 18 for the sealing sphere 4. On the outer side of the reception for the housing 5 is provided a circumferential extension 37 or a plurality of longitudinal extensions around the circumference which is/are bent to the center line 10 to fix the position of the housing 5.

The housing 5 is a hollow cylinder with a diameter to accommodate the loading spring 6. It may have an open bottom and/or side openings along the spring 6. The diameter of the housing 5 can have an increase to accommodate a sealing sphere 4 with a greater diameter than the spring 6. Since the sphere 4 is guided for its longitudinal movement against the force of the spring 6 through the push of the opening piston by the housing, there is provided at least one side channel 11 allowing the fluid entering through the coaxial cavity 12 flowing around the sphere 4 and leave the housing 5.

Two identical quick coupling elements 100 can be inserted inside an installation bore 30, 30' of the two hydraulic connectors 23, 22 of an hydraulic connection 200 featuring a diameter restricting shoulder section or step-like section 26, 26' that allows its installation from the side of the outer face 27, 27' of the hydraulic connectors 23, 22. During installation, when the step-shaped feature or shoulder 31 of the base body 3 gets in touch with the counter step feature or shoulder 26, 26' of the installation bore 30, 30', a pushing force applied on the expansion pin 2 allows to insert this element inside the base body 3, resulting in an outfacing radial force that causes the plastic expansion of the inner walls 20 of the hollow part of the base body 3. This plastic deformation is transmitted to the outer surface 19 of the base body 3 that gets pressed tight against the bore surface 32, 32' of the respective male 22 and female 23 hydraulic connectors, therefore providing in the fully installed state shown in Fig. 3 and Fig. 4 both the functions of anchoring and sealing between the external surface 19 of the base body 3 and the walls of the bore 32, 32' of the respective male 22 and female 23 hydraulic connectors. The front surfaces 38 of the base bodies 3 are then flush with the above-mentioned front surfaces of the hydraulic connectors 23, 22, respectively; and therefore the reference numeral 38 and 27 are used for the center near and center distance parts of this front surface.

The closed state of the quick coupling element is shown in Fig. 1 and Fig. 3. In this closed state, the spring 6 pushes the sphere 4 against the base body 3 and a thin spherical section of the sphere 4 gets in contact with a correspondingly thin spherical section 18 on the base body 3 with a matching curvature radius. In the configuration shown in Fig. 3, a fluid especially a liquid at a defined pressure is present in the circuit 25, 25' and applies a pressure on the back side of the quick coupling element 100, which is called a reverse pressure. This reverse pressure pushes the sphere 4 tight against the base body 3 on the thin spheroid section 18, providing a sealing function and zero leakage of the liquid. In this configuration, the opening piston 1 doesn't offer any resistance to the movement of the sphere 4 and lies in the rest position shown in Fig. 1. The quick coupling element 100 has reduced dimensions compared to prior art solutions, that make it suitable for high-pressure applications and that the sealing of the liquid is achieved without the use of any plastic O-ring.

The open state of the quick coupling element is shown in Fig. 2 and 4. This situation occurs when a male hydraulic connector 23 with an inserted and expanded quick coupling element 100 is plugged to a female hydraulic connector 22 with another opposite-facing, inserted and expanded quick coupling element 100. In this configuration, the outer surface 34 of the male connector 23, together with the inner surface 33 of the female connector 22, forms a guiding system that forces the alignment of the two counterfacing quick coupling elements 100 along their common main longitudinal axis 10 of symmetry which is, in turn, also coincident with the main longitudinal axis 10 of symmetry of the male 23 and female 22 connector system in their plugged state in Fig. 4.

During the close-to-open transition, when the male connector 23 and female connector 22 get plugged together, which is shown by a transition between Fig. 3 and Fig. 4, the outermost front surfaces 21 of the pistons 1 are the first elements of the quick coupling 100 that get in touch to each other. Further connection of the two plugs 23 and 22 up to the final position where the front face 27 of the male connector 23 gets in contact with the back face 27' of the female connector 22, causes the sphere 4 to be pushed back via the contact surface 16 between the sphere 4 and the piston 1, causing a compression of the spring 6 in the housing 5 and bringing the two opposing quick coupling elements 23 and 22 in their fully open state as shown in Fig. 4. The expansion pin 2 features a central hole 17 that guides the piston 1 during its forward and backward movements, in such a way that it is always centered to the main longitudinal symmetry axis 10 of the quick coupling element 100. This is achieved due to a tolerance between the diameter of the middle section 8 of the piston 1 and the diameter of the central hole 17 of the expansion pin 2. In Fig. 2 the reference numeral 17 of the central hole seems to indicate towards the cylindrical surface of the opening piston 1, but there is a sliding tolerance distance between the piston 1 and the expansion pin 2. This guidance ensures the reliability of the functioning of the quick coupling element 100 over several opening-closing circles, by ensuring a reliable contact of the piston back surface 16 to the sphere front surface, symmetrically centered with respect to their common axis of symmetry 10.

The reliability of the quick coupling opening-closing mechanism is also enhanced thanks to the larger diameter and flange 9 of the front section of the piston 1, which increases the contact surface 21 of the portion of the piston 1 responsible for opening the quick coupling element. The flange 9 can be a disk. When pushed inside the expansion pin 2, the backside of the flange 9 can abut against the inner front surface or front side 15 of the expansion pin 2, influencing on the maximum opening displacement of sphere 4.

Furthermore, the piston 1 is characterized by a sphere adjacent portion 7, whose diameter is slightly larger than the diameter of the middle section 8 of the piston 1 which is guided through the expansion pin 2. Whereas the difference of diameter between the middle section 8 and the flange 9 of the piston 1 is of course directly visible in the drawings, the difference in thickness between the middle section 8 and the sphere adjacent portion 7 is small and not well visible in Fig. 1 and Fig. 2. This difference of diameter forces the piston 1 to move within the allowed boundaries and prevents it from escaping the quick coupling element 100 due to the forces acting on the pin 1 during standard operation. Indeed, the back section 7 of the piston 1 with the contact surface is designed with a finely tuned diameter that prevents it from passing through the central hole 17 of the expanding pin 2. During the opening phase, while the sphere 4 is pushed backwards through actuating flange 9, reference numeral 29 designates a section following the coaxial channel 12 for the flowing of the liquid opens at the position that in the closed state of the quick coupling element 100 corresponded to the sealing point provided by the tight contact as thin spherical section 18 between the sphere 4 and the base body 3. The compression of the loading spring 6 during the opening phase, is guided thanks to the housing element 5, whose geometry features a side channel 11 for the passage of the fluid.

The passage of the fluid through the expansion pin 2 happens through a pattern of circular holes 14 that connect the front side 15 of the quick coupling 100 to the back side of the expansion pin 2. To summarize, in the fully open configuration shown in Fig. 4, the flow channel is provided through the opening sections 15, 14, 13, 12, 29, 11. The same open channels are found on the opposing quick coupling element, just mirrored with respect to the contact plane 35 between the male and female connectors. At the backside of the expansion pin 2 is provided a flow allowing cavity 13 which can be a circumferential cavity around the pin 1 with a diameter allowing for a fluid flow out of the circular holes 14 into this cavity 13.

The channels are then going further through installation bore 30, 30' into hoses 25, 25, respectively., crossing from one quick coupling 100 to the adjacent quick coupling 100 which form together a bidirectional check valve 200 when the outer surface 34 of the male hydraulic connector 23 is inserted into the corresponding cavity 28 of the female hydraulic connector 22 until the coupling of the hydraulic connection 200 takes place, which can be effected by bayonet, cam follower, complimentary threads etc.. It can also comprise an O-ring positioned in the recess 24 in the outer surface 34 of the male hydraulic connector and a screw or bolt connection in corresponding openings.

Finally, at disconnection as being the transition from Fig. 4 to Fig. 3, the quick couplings 100 gradually close at both sides when the two front surfaces 21 of the pistons 1 of the fluid coupling elements 100 are separating, providing sealing of the liquid with negligible liquid loss during the transient phase in the circuits 25 and 25', respectively, since the thin spherical section 18 with matching curvature radius of the sphere 4 blocks the connection at central channel 29.

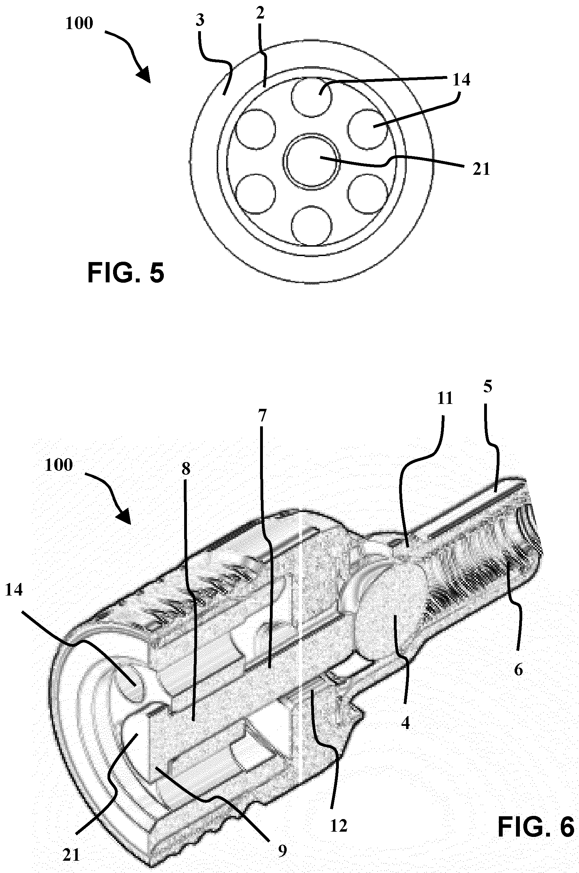

Fig. 5 shows a view on the front surface of the fluid control element 100. The opening piston 1 is positioned on the central longitudinal axis 10 with his outermost front surface 21 extending beyond the based body 3 (out of the drawing plan). The front surface 27 of the base body 3 is also flush with the front surface of the expansion pin 2 when fully encased in the base body 3. There are provided six circular holes in the expansion pin. Of course, there might be only one or two but the flow distribution will be less disturbed when the sphere 4 is moving back from the thin spherical section 18.

Fig. 6 shows a perspective view of the fluid control element 100 of Fig. 1. The housing 5 has the side channel 11 opening. The flange 9 is larger than the middle section 8 of the piston 1. The middle section 8 has a slightly larger diameter than the sphere adjacent section 7 to allow the introduction of the piston 1 under pressure but ensures that the piston 1 cannot glide out of the fluid control element 100 when the fluid control element 100 is oriented with its flange 9 downwards.

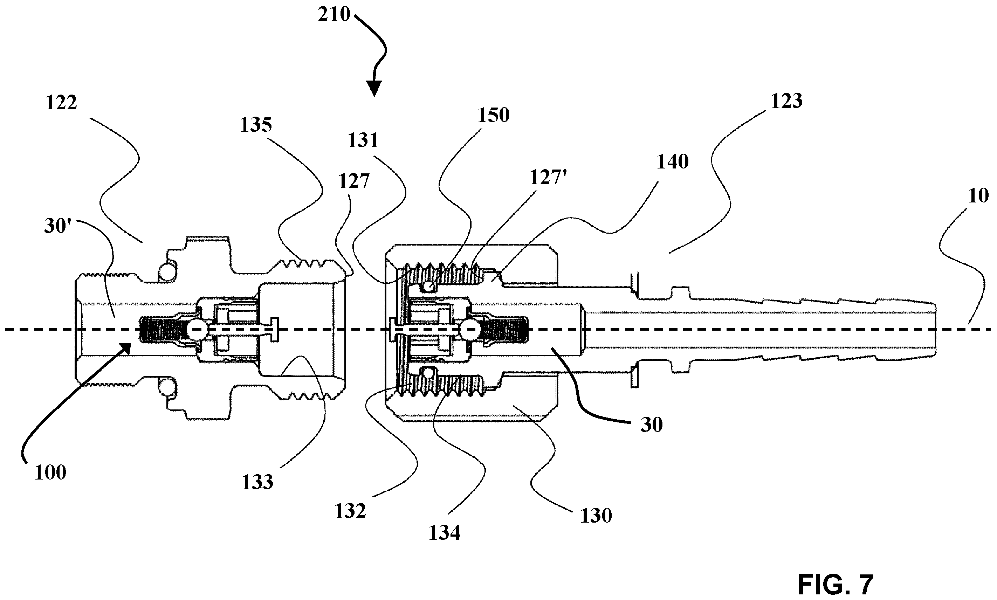

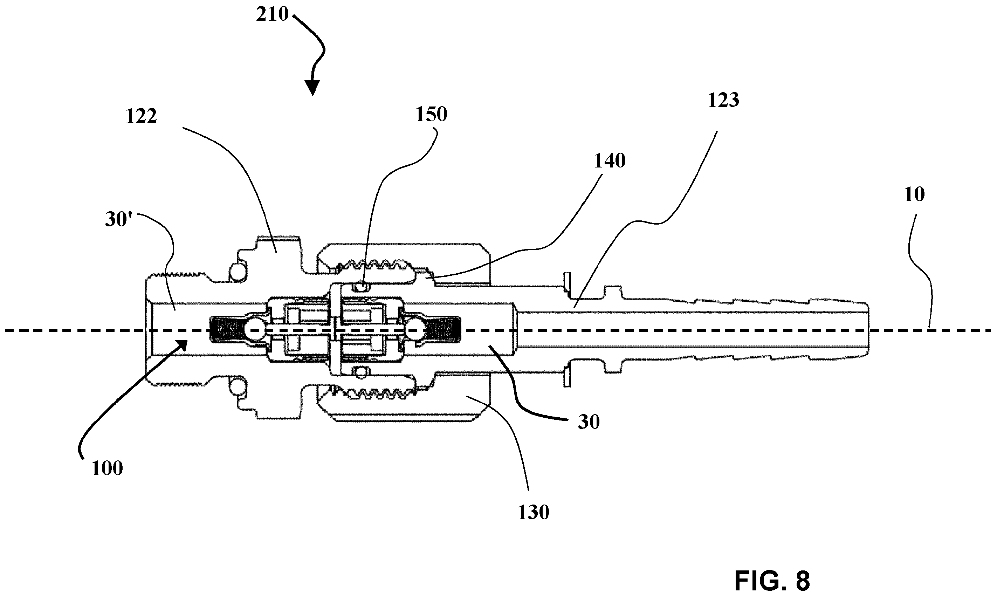

Fig. 7 shows a schematic cross-section view of two fluid control elements 1 according to Fig. 1 positioned in the male and female hydraulic connectors 123, 122 of a further bidirectional check valve one in face of the other; and Fig. 8 shows the schematic cross-section view of Fig. 7, when the further bidirectional check valve is closed. Features of the embodiment shown in Fig. 7 and Fig. 8 which are identical to features of the embodiment of Fig. 3 and 4 have received the same reference numerals.

Two identical quick coupling elements 100 can be inserted inside an installation bore 30, 30' of the two further hydraulic connectors 123, 122 of an hydraulic connection 210 featuring a diameter restricting shoulder section or step-like section 26, 26' like in the embodiment of Fig. 3 that allows its installation from the side of the outer face 27, 27' of the hydraulic connectors 123, 122. During installation, when the step-shaped feature or shoulder 31 of the base body 3 gets in touch with the counter step feature or shoulder 26, 26' of the installation bore 30, 30', a pushing force applied on the expansion pin 2 allows to insert this element inside the base body 3, resulting in an outfacing radial force that causes the plastic expansion of the inner walls 20 of the hollow part of the base body 3. This plastic deformation is transmitted to the outer surface 19 of the base body 3 that gets pressed tight against the bore surface 32, 32' of the respective male 122 and female 123 hydraulic connectors, therefore providing in the fully installed state shown in Fig. 7 and Fig. 8 both the functions of anchoring and sealing between the external surface 19 of the base body 3 and the walls of the bore 32, 32' of the respective male 122 and female 123 hydraulic connectors.

A male connector 123 and a female connector 122 of cylindrical shape are fixed together by means of a threaded nut 130. The cylindrical nature of the male-female connectors 123, 122 ensures higher control on tighter tolerances than a conical shaped connector. This aspect, when the back and front surfaces 127' and 127 of the male and female connectors get engaged, allows for a symmetric and reproducible opening of the quick coupling system 210.

The nut 130 with a threaded inner surface 131 engages the threaded outer surface 135 of the female connector 122. This engagement mechanism ensures a progressive and smooth opening of the two check valves that form, together, the quick coupling system 210.

An O-ring 150 is provided in a circular groove on the outer surface of the male connector 123, preferably in the front half of this surface. It is used to make a pre-sealing before the coupling system 210 opens. Indeed, the O-ring 150 engages the inner surface 133 of the female connector 122 before the opening of the quick coupling system 210. Further engagement of the nut thread 132 with the thread 135 on the female connector 122 opens the quick coupling system 210; when the outermost front surfaces 21 of the two pistons 1, preferably of the respective flange 9 of the pistons 1 of the male and female hydraulic connectors 123 and 122 come into contact one with the other and are pushed back into the fluid coupling element 100. This ensures, at any stage during this opening phase, zero leakage of the fluid to the outside, thanks to the sealing provided by the O-ring 150.

The presence of a step-like feature 140 on the male connector 123 ensures controlled and optimal opening of the quick coupling system 210 at full closure, when the front surface 127 of the female connector 122 gets blocked against the front surface 127' of the step 140.

The closed state of the quick coupling element is shown in Fig. 1 and Fig. 7. In this closed state, the spring 6 pushes the sphere 4 against the base body 3 and a thin spherical section of the sphere 4 gets in contact with a correspondingly thin spherical section 18 on the base body 3 with a matching curvature radius. In the configuration shown in Fig. 7, a fluid especially a liquid at a defined pressure is present in the installation bores 30, 30' on the axis of symmetry 10 which can be connected to a circuit 25, 25' (as shown in Fig. 3 which can be described in Fig. 7 through the bores 30 and 30') and applies a pressure on the back side of the quick coupling element 100, which is called a reverse pressure. This reverse pressure pushes the sphere 4 tight against the base body 3 on the thin spheroid section 18, providing a sealing function and zero leakage of the liquid. In this configuration, the opening piston 1 doesn't offer any resistance to the movement of the sphere 4 and lies in the rest position shown in Fig. 1.

It is noted that the front surface of the nut 130 extends further along the axis 10 than the front surface 21 of the flange 9 of the piston 1, thus protecting the piston 1.

The open state of the quick coupling element is shown in Fig. 2 and 8. This situation occurs when a male hydraulic connector 123 with an inserted and expanded quick coupling element 100 is plugged to a female hydraulic connector 122 with another opposite-facing, inserted and expanded quick coupling element 100. In this configuration, the outer surface 132 of the male connector 123, together with the inner surface 133 of the female connector 122, forms a guiding system that forces the alignment of the two counterfacing quick coupling elements 100 along their common main longitudinal axis 10 of symmetry which is, in turn, also coincident with the main longitudinal axis 10 of symmetry of the male 123 and female 122 connector system in their plugged state in Fig. 8.

A groove in the outer surface 132 of the male connector 123 comprises the O-ring 150 which is engaged by the inner surface 133 of the female connector 122, avoiding any leaks when and before the final configuration of Fig. 8 is reached. The nut 130 is turned around its symmetry axis 10 and moves the male connector 123 and the female connector 122 together until the front surface 127 of the female connector 122 is in contact with the front shoulder of the step 140.

During the close-to-open transition, when the male connector 123 and female connector 222 get plugged together, which is shown by a transition between Fig. 7 and Fig. 8, the hollow sleeves of the quick couplings 100 are the first elements of the quick coupling 100 that get in touch to each other and the O-ring 150 of the male connector 123 is engaged by the female connector 122 before the outermost front surfaces 21 of the pistons 1 are touching each other. Further connection of the two plugs 123 and 122 up to the final position causes the sphere 4 to be pushed back via the contact surface 16 between the sphere 4 and the piston 1, causing a compression of the spring 6 in the housing 5 and bringing the two opposing quick coupling elements 123 and 122 in their fully open state as shown in Fig. 8. The expansion pin 2 features a central hole 17 that guides the piston 1 during its forward and backward movements, in such a way that it is always centered to the main longitudinal symmetry axis 10 of the quick coupling element 100. This is achieved due to a tolerance between the diameter of the middle section 8 of the piston 1 and the diameter of the central hole 17 of the expansion pin 2.

The reliability of the quick coupling opening-closing mechanism is also enhanced thanks to the larger diameter and flange 9 of the front section of the piston 1, which increases the contact surface 21 of the portion of the piston 1 responsible for opening the quick coupling element. The flange 9 can be a disk. When pushed inside the expansion pin 2, the backside of the flange 9 can abut against the inner front surface or front side 15 of the expansion pin 2, influencing on the maximum opening displacement of sphere 4.

The passage of the fluid through the expansion pin 2 happens through a pattern of circular holes 14 that connect the front side 15 of the quick coupling 100 to the back side of the expansion pin 2. To summarize, in the fully open configuration shown in Fig. 8, the flow channel is provided through the opening sections 15, 14, 13, 12, 29, 11 as referenced in Fig. 1 and 2. The same open channels are found on the opposing quick coupling element, just mirrored with respect to the contact plane between the male and female connectors 123 and 122. At the backside of the expansion pin 2 is provided a flow allowing cavity 13 which can be a circumferential cavity around the pin 1 with a diameter allowing for a fluid flow out of the circular holes 14 into this cavity 13.

**LIST OF REFERENCE SIGNS**

| | | | |
|---|---|---|---|
| 1 | opening piston | 28 | cavity |
| 2 | expansion pin | 29 | central channel |
| 3 | sleeve-shaped base body | 30, 30' | installation bore |
| 4 | sphere | 31 | shoulder |
| 5 | housing | 32, 32' | bore surface |
| 6 | loading spring | 33 | inner surface |
| 7 | sphere adjacent portion | 34 | outer surface |
| 8 | middle section | 35 | contact plane |
| 9 | flange of piston | 36 | locking openings |
| 10 | axis of symmetry | 37 | extension |
| 11 | side channel | 38 | front surface |
| 12 | coaxial cavity | 100 | fluid coupling element |
| 13 | back side | 122 | female hydraulic connector |
| 14 | circular holes | 123 | male hydraulic connector127 front surface of female connector |
| 15 | front side | | |
| 16 | contact surface | | |
| 17 | central hole | 127' | front surface of male connector |
| 18 | thin spherical section with matching curvature radius | | |
| | | 130 | threaded nut |
| 19 | outer surface | 131 | inner threaded surface |
| 20 | inner wall | 132 | nut thread |
| 21 | outermost front surface | 133 | inner surface |
| 22 | female hydraulic connector | 134 | outer surface |
| 23 | male hydraulic connector | 135 | outer threaded surface |
| 24 | recess for O-ring | 140 | step with front shoulder |
| 25, 25' | circuit / hose | 150 | O-ring |
| 26, 26' | shoulder section | 200 | hydraulic connection |
| 27 | front face | 210 | hydraulic connection |
| 27' | back face | | |

## Claims

1. A quick coupler for fluid-conducting lines, comprising:
a tubular body (3) having an external sleeve surface (19), an internal reception cavity, an axial fluid flow passage (12) therethrough and a valve seat (18),
an expansion body (2) having an axial fluid flow passage (14) therethrough and an external sleeve surface (20), and
a valve comprising a valve ball (4), a stem (1) and a compression spring (6), wherein the valve ball (4) is positioned between the spring (6) and the stem (1), wherein the spring (6) is positioned to pretension the valve ball (4) against the valve seat (18) and closing the axial fluid flow passage (12, 14) through the quick coupler for any pressure on the valve ball (4) from the direction of the stem (1) lower than a predetermined threshold, wherein the stem (1) is extending beyond the front surface (38) of the tubular body (3) when the valve ball (4) is in contact with the valve seat (18) and wherein the axial fluid flow passage (12, 14) through the quick coupler is open when the stem (1) is pushed in the direction of the valve ball (4), **characterized in that** the external sleeve surface (20) of the expansion body (2) is oversized in view of the internal reception cavity of the tubular body (3) for creating an outwards directed force on the external sleeve surface (19) of the tubular body (3) when introduced into the tubular body (3), and **in that**, when the stem (1) is pushed in direction of the valve ball, that the front surface (21) of the stem (1) is flush with the front surface (38) of the tubular body (3), wherein the spring (6) and the valve ball (4) are at least partially positioned in a cylindrical housing (5) which is attached to the tubular body (3).

2. The quick coupler according to claim 1, wherein the stem (1) has a flange (9) having a greater diameter than the guiding bore of the expansion body (2).

3. The quick coupler according to claim 1 or 2, wherein the housing (5) has a side opening (11) near its attachment portion to the tubular body (11).

4. The quick coupler according to any one of claims 1 to 3, wherein the housing (5) has a first inner diameter near the attachment portion to the tubular body (11) adapted to accommodate and guide the valve ball (4) and a second inner diameter on the side opposite to the attachment portion to the tubular body (11) adapted to accommodate and guide the spring (6).

5. The quick coupler according to claim 4, wherein the housing (5) has an open bottom surface and/or side openings along its portion with the second diameter.

6. The quick coupler according to claim 4 or 5, wherein the first diameter is larger than the second diameter and a tapering section is provided between the two portions of different diameter.

7. The quick coupler according to any one of claims 1 to 6, wherein the axial fluid flow passage (14) inside the expansion body (2) comprises at least one, preferably a number of axial through holes in the expansion body (2) in a radial distance from the longitudinal axis (10) of the expansion body (2).

8. A fluid coupling (200, 210) for fluid-conducting lines, comprising:
a first quick coupler (100) and a second quick coupler (100), both according to any one of claims 1 to 7;
a male hydraulic connector (23, 123) having an axial fluid flow passage therethrough (14), a reception cavity with the diameter of the tubular body (3) of the second quick coupler (100) and having a rear end for connection with a second fluid-conducting line (25) and an opposite forward end (27) and comprising a coupling end (34, 134),
a female hydraulic connector (22, 122) having an axial fluid flow passage therethrough (14) including a reception cavity with the diameter of the tubular body (3) of the first quick coupler (100), having a rear end for connection with a first fluid-conducting line (25') and an opposite forward end as well as a reception cavity (28) for the coupling end (34,134) of the male hydraulic connector (23, 100);
wherein the first and second quick coupler (100) are positioned in the male (23, 123) and female (22, 122) hydraulic connectors with the front surface not extending beyond the front surface (27) or beyond the inner wall surface (27') of the reception cavity (28) of the male (23, 123) and female (22, 122) hydraulic connector, respectively, when the expansion bodies (2) of the quick couplers (100) are fully positioned in the respective quick couplers (100);
wherein the female (22, 122) and male (23, 123) hydraulic connectors being configured such that the forward end of the male hydraulic connector can be axially inserted into the forward end of the female hydraulic connector for establishing a continuous fluid flow path between the hydraulic connectors (22, 23; 122, 123).

9. The fluid coupling (200, 210) according to claim 8, wherein the male hydraulic connector (23) as well as the female hydraulic connector (22) have a connection device (36, 130),.

10. The fluid coupling (200) according to claim 9, wherein the connection device comprises a screw connecting the male (22) and female (23) connector in a radial distance from the axis (10) of the male (22) and female (23) connectors wherein the screw is oriented in parallel to said axis (10).

11. The fluid coupling according to claim 9, wherein the male and female connectors are connected with a connection device comprising a bayonet catch, tension lock or swing stopper.

12. The fluid coupling (210) according to claim 9, wherein the connection device comprises a nut (130) with an internal thread (132) surrounding the sleeve of the male connector (123) and an outer threaded surface (135) provided on the sleeve of the female connector (122).

13. The fluid coupling (210) according to claim 12, wherein a circumferential groove is provided on the sleeve of the male connector (123) and wherein an O-ring (150) is provided in this groove engaging the inner surface (133) of the female connector (122) when rotating the nut (130) moves the female connector (122) towards the male connector (123) until the open fluid coupling (210) is achieved upon contact of the front surface of the female connector (122) with the step of the front shoulder (140).

## Patentansprüche

1. Schnellkupplung für Fluidleitungen, umfassend:
einen rohrförmigen Körper (3) mit einer äusseren Mantelfläche (19), einem inneren Aufnahmeraum, einem durchgehenden axialen Fluidströmungskanal (12) und einem Ventilsitz (18),
einen Expansionskörper (2) mit einem durchgehenden axialen Fluidströmungskanal (14) und einer äusseren Mantelfläche (20) sowie
ein Ventil, das eine Ventilkugel (4), ein Stössel (1) und eine Druckfeder (6) umfasst, wobei die Ventilkugel (4) zwischen der Feder (6) und dem Stössel (1) angeordnet ist, wobei die Feder (6) so angeordnet ist, dass sie die Ventilkugel (4) gegen den Ventilsitz (18) vorspannt und den axialen Fluidströmungskanal (12, 14) durch die Schnellkupplung bei jedem Druck auf die Ventilkugel (4) aus Richtung der Spindel (1) schliesst, der unter einem vorbestimmten Schwellenwert liegt, wobei sich der Stössel (1) über die Vorderseite (38) des rohrförmigen Körpers (3) hinaus erstreckt, wenn die Ventilkugel (4) mit dem Ventilsitz (18) in Kontakt steht, und wobei der axiale Fluidströmungskanal (12, 14) durch die Schnellkupplung offen ist, wenn der Stössel (1) in Richtung der Ventilkugel (4) gedrückt wird, **dadurch gekennzeichnet, dass** die äussere Mantelfläche (20) des Expansionskörpers (2) im Hinblick auf den inneren Aufnahmeraum des Rohrkörpers (3) überdimensioniert ist, um beim Einführen in den Rohrkörper (3) eine nach aussen gerichtete Kraft auf die äussere Mantelfläche (19) des Rohrkörpers (3) auszuüben, und dadurch, dass, wenn der Stössel (1) in Richtung der Ventilkugel gedrückt wird, die Stirnfläche (21) des Stössels (1) bündig mit der Stirnfläche (38) des Rohrkörpers (3) abschliesst, wobei die Feder (6) und die Ventilkugel (4) zumindest teilweise in einem zylindrischen Gehäuse (5) angeordnet sind, das am Rohrkörper (3) befestigt ist.

2. Schnellkupplung nach Anspruch 1, wobei der Stössel (1) einen Flansch (9) aufweist, dessen Durchmesser grösser ist als der der Führungsbohrung des Expansionskörpers (2).

3. Schnellkupplung nach Anspruch 1 oder 2, wobei das Gehäuse (5) in der Nähe seines Befestigungsabschnitts am Rohrkörper (11) eine seitliche Öffnung (11) aufweist.

4. Schnellkupplung nach einem der Ansprüche 1 bis 3, wobei das Gehäuse (5) einen ersten Innendurchmesser in der Nähe des Befestigungsabschnitts am Rohrkörper (11) aufweist, der zur Aufnahme und Führung der Ventilkugel (4) ausgelegt ist, und einen zweiten Innendurchmesser auf der dem Befestigungsabschnitt am Rohrkörper (11) gegenüberliegenden Seite aufweist, der zur Aufnahme und Führung der Feder (6) ausgelegt ist.

5. Schnellkupplung nach Anspruch 4, wobei das Gehäuse (5) eine offene Bodenfläche und/oder seitliche Öffnungen entlang seines Abschnitts mit dem zweiten Durchmesser aufweist.

6. Schnellkupplung nach Anspruch 4 oder 5, wobei der erste Durchmesser grösser ist als der zweite Durchmesser und zwischen den beiden Abschnitten mit unterschiedlichem Durchmesser ein sich verjüngender Abschnitt vorgesehen ist.

7. Schnellkupplung nach einem der Ansprüche 1 bis 6, wobei der axiale Fluidströmungskanal (14) im Inneren des Expansionskörpers (2) mindestens eine, vorzugsweise mehrere axiale Durchgangsbohrungen im Expansionskörper (2) in einem radialen Abstand von der Längsachse (10) des Expansionskörpers (2) umfasst.

8. Fluidkupplung (200, 210) für Fluidleitungen, umfassend:
eine erste Schnellkupplung (100) und eine zweite Schnellkupplung (100), beide gemäss einem der Ansprüche 1 bis 7;
einen männlichen Hydraulikanschluss (23, 123) mit einem durchgehenden axialen Fluidströmungskanal (14), einem Aufnahmeraum mit dem Durchmesser des rohrförmigen Körpers (3) des zweiten Schnellkupplers (100) und mit einem hinteren Ende zum Anschluss an einer zweiten Fluidleitung (25) sowie einem gegenüberliegenden vorderen Ende (27), und umfassend ein Kupplungsende (34, 134),
einen weiblichen Hydraulikanschluss (22, 122) mit einem durchgehenden axialen Fluidströmungskanal (14) umfassend einen Aufnahmeraum mit dem Durchmesser des rohrförmigen Körpers (3) der ersten Schnellkupplung (100), mit einem hinteren Ende zum Anschluss an eine erste Fluidleitung (25') und einem gegenüberliegenden vorderen Ende sowie einem Aufnahmeraum (28) für das Kupplungsende (34, 134) des männlichen Hydraulikanschlusses (23, 100);
wobei die erste und die zweite Schnellkupplung (100) in dem männlichen (23, 123) bzw. dem weiblichen (22, 122) Hydraulikanschluss positioniert sind, wobei die Vorderseite nicht über die Vorderseite (27) oder über die Innenwandfläche (27') des Aufnahmeraums (28) des männlichen (23, 123) bzw. des weiblichen (22, 122) Hydraulikanschlusses hinausragt, wenn die Expansionskörper (2) der Schnellkupplungen (100) vollständig in den jeweiligen Schnellkupplungen (100) positioniert sind;
wobei der weibliche (22, 122) und der männliche (23, 123) Hydraulikanschluss so ausgebildet sind, dass das vordere Ende des männlichen Hydraulikanschlusses axial in das vordere Ende des weiblichen Hydraulikanschlusses eingeführt werden kann, um einen durchgehenden Fluidströmungsweg zwischen den Hydraulikanschlüssen (22, 23; 122, 123) herzustellen.

9. Fluidkupplung (200, 210) nach Anspruch 8, wobei sowohl der männliche Hydraulikanschluss (23) als auch der weibliche Hydraulikanschluss (22) eine Verbindungsvorrichtung (36, 130) aufweisen.

10. Fluidkupplung (200) nach Anspruch 9, wobei die Verbindungsvorrichtung eine Schraube umfasst, die den männlichen (22) und den weiblichen (23) Anschluss in einem radialen Abstand von der Achse (10) des männlichen (22) und des weiblichen (23) Anschlusses verbindet, wobei die Schraube parallel zu der Achse (10) ausgerichtet ist.

11. Fluidkupplung nach Anspruch 9, wobei der männliche und der weibliche Anschluss mit einer Verbindungsvorrichtung verbunden sind, die eine Bajonettverriegelung, eine Spannverriegelung oder einen Schwenkanschlag umfasst.

12. Fluidkupplung (210) nach Anspruch 9, wobei die Verbindungsvorrichtung eine Mutter (130) mit einem Innengewinde (132), das den Mantel des männlichen Anschlusses (123) umgibt, und eine Aussengewindefläche (135) umfasst, die am Mantel des weiblichen Anschlusses (122) vorgesehen ist.

13. Fluidkupplung (210) nach Anspruch 12, wobei am Mantel des männlichen Anschlusses (123) eine Umfangsnut vorgesehen ist und wobei in dieser Nut ein O-Ring (150) vorgesehen ist, der bei Drehung der Mutter (130) an der Innenfläche (133) des weiblichen Anschlusses (122) in Eingriff kommt, wobei beim Drehen der Mutter (130) der weibliche Anschluss (122) in Richtung des männlichen Anschlusses (123) bewegt wird, bis die offene Fluidkupplung (210) erreicht ist, sobald die Vorderseite des weiblichen Anschlusses (122) mit der Stufe der vorderen Schulter (140) in Kontakt kommt.

## Revendications

1. Raccord rapide pour conduites de fluide, comprenant :
un corps tubulaire (3) comportant une surface de manchon externe (19), une cavité de réception interne, un passage axial d'écoulement de fluide (12) le traversant et un siège de vanne (18),
un corps d'expansion (2) comportant un passage axial d'écoulement de fluide (14) le traversant et une surface de manchon externe (20), et
une vanne comprenant une bille de vanne (4), une tige (1) et un ressort de compression (6),
la bille de vanne (4) étant positionnée entre le ressort (6) et la tige (1), le ressort (6) étant positionné de manière à précontraindre la bille de vanne (4) contre le siège de vanne (18) et à fermer le passage axial d'écoulement de fluide (12, 14) à travers le raccord rapide pour toute pression exercée sur la bille de vanne (4) depuis la direction de la tige (1) inférieure à un seuil prédéterminé, la tige (1) s'étendant au-delà de la surface avant (38) du corps tubulaire (3) lorsque la bille de vanne (4) est en contact avec le siège de vanne (18) et le passage axial d'écoulement de fluide (12, 14) traversant le raccord rapide étant ouvert lorsque la tige (1) est poussée dans la direction de la bille de vanne (4), **caractérisé en ce que** la surface externe (20) du manchon du corps d'expansion (2) est surdimensionnée par rapport à la cavité de réception interne du corps tubulaire (3) afin de créer une force dirigée vers l'extérieur sur la surface externe (19) du manchon du corps tubulaire (3) lors de son introduction dans le corps tubulaire (3), et **en ce que**, lorsque la tige (1) est poussée en direction de la bille de vanne, la surface avant (21) de la tige (1) affleure la surface avant (38) du corps tubulaire (3), le ressort (6) et la bille de vanne (4) étant au moins partiellement positionnés dans un boîtier cylindrique (5) qui est fixé au corps tubulaire (3).

2. Raccord rapide selon la revendication 1, dans lequel la tige (1) comporte une bride (9) ayant un diamètre supérieur à celui de l'alésage de guidage du corps d'expansion (2).

3. Raccord rapide selon la revendication 1 ou 2, dans lequel le logement (5) comporte une ouverture latérale (11) à proximité de sa partie de fixation au corps tubulaire (11).

4. Raccord rapide selon l'une quelconque des revendications 1 à 3, dans lequel le boîtier (5) présente un premier diamètre intérieur à proximité de la partie de fixation au corps tubulaire (11), adapté pour recevoir et guider la bille de vanne (4), et un second diamètre intérieur sur le côté opposé à la partie de fixation au corps tubulaire (11), adapté pour recevoir et guider le ressort (6).

5. Raccord rapide selon la revendication 4, dans lequel le boîtier (5) présente une surface de fond ouverte et/ou des ouvertures latérales le long de sa partie présentant le deuxième diamètre.

6. Raccord rapide selon la revendication 4 ou 5, dans lequel le premier diamètre est supérieur au second diamètre et une section conique est prévue entre les deux parties de diamètres différents.

7. Raccord rapide selon l'une quelconque des revendications 1 à 6, dans lequel le passage axial d'écoulement de fluide (14) à l'intérieur du corps d'expansion (2) comprend au moins un, de préférence plusieurs trous traversants axiaux dans le corps d'expansion (2) à une distance radiale de l'axe longitudinal (10) du corps d'expansion (2).

8. Raccord de fluide (200, 210) pour des conduites de fluide, comprenant :
un premier raccord rapide (100) et un deuxième raccord rapide (100), tous deux selon l'une quelconque des revendications 1 à 7 ;
un raccord hydraulique mâle (23, 123) comportant un passage axial d'écoulement de fluide (14), une cavité de réception ayant le diamètre du corps tubulaire (3) du deuxième raccord rapide (100) et comportant une extrémité arrière destinée à la connexion avec une deuxième conduite de fluide (25) et une extrémité avant opposée (27) et comprenant une extrémité de raccordement (34, 134),
un raccord hydraulique femelle (22, 122) comportant un passage axial d'écoulement de fluide (14) comprenant une cavité de réception ayant le diamètre du corps tubulaire (3) du premier raccord rapide (100), comportant une extrémité arrière destinée à être raccordée à une première conduite de fluide (25') et une extrémité avant opposée ainsi qu'une cavité de réception (28) pour l'extrémité d'accouplement (34, 134) du raccord hydraulique mâle (23, 100) ;
les premier et deuxième raccords rapides (100) étant positionnés dans les connecteurs hydrauliques mâle (23, 123) et femelle (22, 122) de telle sorte que la surface avant ne dépasse pas la surface avant (27) ou la surface de la paroi interne (27') de la cavité de réception (28) des connecteurs hydrauliques mâle (23, 123) et du raccord hydraulique femelle (22, 122), respectivement, lorsque les corps d'expansion (2) des raccords rapides (100) sont complètement positionnés dans les raccords rapides respectifs (100) ;
les raccords hydrauliques femelles (22, 122) et mâles (23, 123) étant configurés de telle sorte que l'extrémité avant du raccord hydraulique mâle puisse être insérée axialement dans l'extrémité avant du raccord hydraulique femelle afin d'établir un circuit d'écoulement de fluide continu entre les raccords hydrauliques (22, 23 ; 122, 123).

9. Raccord de fluide (200, 210) selon la revendication 8, dans lequel le connecteur hydraulique mâle (23) ainsi que le connecteur hydraulique femelle (22) comportent un dispositif de raccordement (36, 130).

10. Raccord de fluide (200) selon la revendication 9, dans lequel le dispositif de raccordement comprend une vis reliant le connecteur mâle (22) et le connecteur femelle (23) à une distance radiale de l'axe (10) des connecteurs mâle (22) et femelle (23), la vis étant orientée parallèlement audit axe (10).

11. Raccord de fluide selon la revendication 9, dans lequel les connecteurs mâle et femelle sont reliés par un dispositif de raccordement comprenant un verrou à baïonnette, un verrou à tension ou un arrêt pivotant.

12. Raccord de fluide (210) selon la revendication 9, dans lequel le dispositif de raccordement comprend un écrou (130) avec un filetage interne (132) entourant le manchon du connecteur mâle (123) et une surface filetée externe (135) prévue sur le manchon du connecteur femelle (122).

13. Raccord de fluide (210) selon la revendication 12, dans lequel une rainure circonférentielle est prévue sur le manchon du raccord mâle (123) et dans lequel un joint torique (150) est prévu dans cette rainure, venant en prise avec la surface intérieure (133) du connecteur femelle (122) lorsque la rotation de l'écrou (130) déplace le connecteur femelle (122) vers le connecteur mâle (123) jusqu'à ce que raccord de fluide ouvert (210) soit obtenu au contact de la surface avant du connecteur femelle (122) avec le gradin de l'épaulement avant (140).
